## Europäisches Patentamt

## European Patent Office

## Office européen des brevets

(11) Veröffentlichungsnummer: **0 272 403**
**B1**

(12) **EUROPÄISCHE PATENTSCHRIFT**

(45) Veröffentlichungstag der Patentschrift:
**04.10.89**

(51) Int. Cl.⁴: **F16C 11/06**, F16C 33/20

(21) Anmeldenummer: **87115551.1**

(22) Anmeldetag: **23.10.87**

(54) **Kugelgelenk.**

(30) Priorität: **22.11.86  DE 3639962**

(43) Veröffentlichungstag der Anmeldung:
**29.06.88 Patentblatt 88/26**

(45) Bekanntmachung des Hinweises auf die Patenterteilung:
**04.10.89 Patentblatt 89/40**

(84) Benannte Vertragsstaaten:
**DE FR GB IT**

(56) Entgegenhaltungen:
**DE-A- 2 441 914**
**DE-A- 3 239 208**
**GB-A- 1 233 906**

(73) Patentinhaber: **TRW Ehrenreich GmbH & Co. KG,**
**Hansa-Allee 190, D-4000 Düsseldorf 11(DE)**

(72) Erfinder: **Ito, Eiichi, Feldstrasse 22,**
**D-4005 Meerbusch(DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11(DE)**

## Beschreibung

Gegenstand der Erfindung ist ein Kugelgelenk für Übertragungsgestänge in Kraftfahrzeugen mit einer zwischen einem Gelenkgehäuse aus Kunststoff und einem Kugelkopf mit Kugelzapfen eingesetzen Lagerschale aus Kunststoff, wobei die Lagerschale durch Verrastung von an ihrem Mantel ausgebildeten Vorsprüngen an in der Innenwand des Gelenkgehäuses ausgebildeten Hinterschnitten gegen Ausstoßen aus dem Gelenkgehäuse mindestens entgegen der Kugelzapfenrichtung gesichert ist.

Es bestehen Bestrebungen, das Gelenkgehäuse aus Kunststoff herzustellen. Dadurch sollen die Herstellkosten und das Bauteilgewicht reduziert werden. Ferner erscheint es möglich, Gelenkgehäuse einteilig an Übertragungsgestänge aus GFK anzuformen. Übertragungsgestänge in Kraftfahrzeugen, beispielsweise Verbindungsstangen für den Stabilisator können jedoch erheblichen Beanspruchungen unterliegen. Beim Einsatz von Kunststoff für das Gelenkgehäuse muß deshalb der Kugelzapfen wirksam gegen Ausziehen und Ausdrücken gesichert werden. Darüber hinaus bedarf es eines dichten und kostengünstigen Verschlusses, um das Innere des Gelenkgehäuses vor dem Eindringen von Verschmutzungen zu bewahren.

Aus der DE-OS 32 39 208 ist ein Kugelgelenk mit einem Gelenkgehäuse aus Kunststoff bekannt, das eine Lagerschale und einen Ring zur Aufnahme eines Kugelkopfes aufweist. Die Lagerschale ist aus Kunststoffmaterial hergestellt und weist außen eine Ringnut zum Verrasten an einem umlaufenden Vorsprung des Gelenkgehäuses auf. Diese Lagerschale hat außerdem einen umlaufenden Flansch zur Abstützung und Abdichtung an der Oberseite des Gelenkgehäuses. Der geschnittene und aufbiegbare Ring ist angrenzend an die Gehäusehälfte aus Kunststoff im Gelenkgehäuse angeordnet und wird von einer zur Durchtrittsöffnung für den Kugelzapfen hin konisch verlaufenden Bohrung des Gelenkgehäuses unterfangen. Beim Einführen des Kugelkopfes wird der Ring gegen die Lagerschalenhälfte aus Kunststoff gedrückt, bis er den Hauptdurchmesser des Kugelkopfes annimmt. Dann zieht sich der Ring wieder zusammen bis er an der konischen Bohrung anliegt. Dann wird der Kugelkopf an beiden Lagerschalenhälften abgestützt und ist gegen ein Herausfallen gesichert. Die Vorspannung des Ringes sorgt zudem für Spielfreiheit.

Bei dem bekannten Kugelgelenk können keine großen axialen Zugkräfte in den Kugelzapfen eingeleitet werden, da dieser aus dem metallischen Ring herausziehbar ist. Darüber hinaus ist die Herstellung des Gelenkgehäuses aufwendig, da es zum Erzeugen des umlaufenden Vorsprunges bzw. der konischen Bohrung einer aufwendigen Spritzform bzw. eines zusätzlichen Nachbearbeitungsvorganges bedarf. Der im Gelenkgehäuse umlaufende Vorsprung bedingt, daß hohe Kräfte zum Einpressen der Lagerschalenhälfte aus Kunststoff erforderlich sind, wodurch die Ränder der Vorsprünge und der Ringnut beschädigt werden können. Dies wiederum kann im Betrieb ein Ausdrücken des Kugelzapfens zur Folge haben. Darüber hinaus besteht bei der bekannten Konstruktion die Gefahr des Mitdrehens der Lagerschalenhälfte aus Kunststoff mit dem Kugelkopf, wodurch ein Verschleiß zwischen Gelenkgehäuse und Lagerschalenhälfte auftritt, der die Gefahr des Ausdrückens noch steigert.

Aus der DE-PS 35 15 303 ist ein Kugelgelenk bekannt, welches aus einer Kugel mit Schaft, einer Kugelpfanne mit Schlitzen an der Öffnungsseite, einem Stohlring mit Hebel zur Aufnahme des Gelenkes und einer einstückig an die Kugelpfanne angesetzten Verspanneinheit besteht, durch die auch der obere Bereich der Kugelpfanne verspannt wird und die zur kraft- und formschlüssigen Stabilisierung der Kugelpfanne dient. Die Verspanneinheit zur axialen Verspannung der Kugelpfanne mit dem das Gehäuse des Kugelgelenkes bildenden Stahlring ist als Kniehebelmechanismus ausgebildet. Dieser Kniehebelmechanismus weist an der Kugelpfanne angebrachte Haken auf, die über Stützen mit einem zentral angeordneten und axial beweglichen Druckstück verbunden sind. Das Druckstück dient dabei als Handhabe zur Betätigung des Kniehebelmechanismus. Bei diesem bekannten Kugelgelenk ist die Kugelpfanne nicht gegen Verdrehen im Gehäuse gesichert.

Schließlich ist aus der GB-OS 21 66 487 noch ein Kugelgelenk bekannt, dessen Lagerschale in einer Halterung eingeschnappt werden kann und dabei der Halterung einerseits mit einem umlaufenden Bund und andererseits mit federnden Haken anliegt. Auch bei diesem bekannten Kugelgelenk ist eine Sicherung der Lagerschale gegen Verdrehen nicht vorgesehen.

Davon ausgehend liegt der Erfindung die **Aufgabe** zugrunde, das bekannte Kugelgelenk so zu verbessern, daß das Gelenkgehäuse einfacher herstellbar und die Lagerschale an einem Mitdrehen gehindert und gegen Ausdrücken aus dem Gehäuse zuverlässig gesichert ist.

Als technische **Lösung** wird vorgeschlagen, daß die Hinterschnitte Stirnwände von in der Innenwand des Gelenkgehäuses ausgebildeten, sich geradlinig in Kugelzapfenachsrichtung erstreckenden Nuten sind, die offen in der dem Kugelzapfen zugewandten Stirnfläche des Gelenkgehäuses enden und an ihren anderen Enden durch die Stirnwände abgeschlossen sind, und daß die Vorsprünge der Lagerschale in die Nuten eingreifen, wobei sie außer an den Sitrnwänden auch an den Seitenwänden der jeweiligen Nut anliegen.

Bei einem erfindungsgemäßen Kugelgelenk wird die Lagerschale in das Gelenkgehäuse eingedrückt, wobei sich die Vorsprünge zurückbiegen, bis sie in die Nut zurückschnappen. Da die Vorsprünge darauf an den in Umfangsrichtung sich erstreckenden Begrenzungswänden der Nuten anliegen, ist die Lagerschale an einem Ausziehen oder Ausdrücken entgegen ihrer Einschieberichtung gesichert. In der anderen Richtung kann sie in herkömmlicher Weise von einem an ihrer Stirnseite angreifenden Innenflansch des Gelenkgehäuses oder, falls sie sich in einer Achsrichtung außen verjüngt, von einer entsprechend sich verjüngenden Innenwand des Gelenkgehäuses gehalten sein. Es liegt aber auch im Rahmen der Erfindung, das Gelenkgehäuse mit zwei Gruppen von Nuten zu versehen, die sich an beiden Stirnseiten des Gelenkgehäuses öffnen, wobei korrespondierende Gruppen von Vorsprüngen die Lagerschale gegen ein Ausdrücken bzw. Ausziehen sichern. Da die Vorsprünge außerdem an den radialen Begrenzungswänden der Nuten anliegen, wird ein Mitdrehen der Lagerschale mit dem Kugelkopf verhindert.

Das Gelenkgehäuse eines erfindungsgemäßen Kugelgelenks ist einfach durch Spritzgießen herstellbar. Hierzu wird nämlich ein zweigeteilter Kernstempel verwendet, dessen einer Kernstempelteil die Innenwand der Nuten und dessen anderer Kernstempelteil die übrige Innenwand des Glenkgehäuses erzeugt. Diese Kernstempelteile sind beim Spritzgießen in der Spritzform ineinandergreifend angeordnet und fahren nach dem Spritzgießen getrennt voneinander in entgegengesetzte Richtungen, so daß sie das Gelenkgehäuse mit Hinterschnitten in beiden Richtungen der Zapfenachse freigeben.

Bei einer bevorzugten Ausgestaltung der Erfindung sind die Vorsprünge an die Lagerschale angeformte, sich spitzwinklig zu den in Umfangsrichtung sich erstreckenden Begrenzungswänden der Nuten erstreckende, biegeelastische Laschen, welche beim Einschieben der Lagerschale von der Innenwand des Gelenkgehäuses zur Lagerschale hin elastisch verbogen werden und beim Erreichen der Nuten in diese einschnappen. Die Laschen unterliegen bei der Montage keiner Beschädigung und können andererseits hohe Axialkräfte übertragen, da sie praktisch ausschließlich einer Druckbeanspruchung unterliegen. Wenn die Laschen an den in Umfangsrichtung sich erstreckenden und den radialen Begrenzungswänden und den Grundflächen der Nuten anliegende Randwülste haben, werden die zu übertragenden Kräfte günstig in die Laschen bzw. das Gelenkgehäuse eingeleitet, so daß lokal keine plastischen Verformungen auftreten.

Bei einer weiteren Ausgestaltung ist das Gelenkgehäuse aus GFK hergestellt, so daß es auch erhebliche Kräfte übertragen kann. Die Lagerschale wird vorzugsweise aus einem hartelastischen Kunststoff, beispielsweise Polyoxymethylen (POM) hergestellt. Der Gehäusedeckel hingegen kann aus einem weichelastischen Kunststoff hergestellt werden, beispielsweise Polyurethan (PUR), da er im wesentlichen eine Dichtfunktion und keine tragende Funktion ausübt.

Weitere Einzelheiten und Vorteile ergeben sich aus der nachfolgenden Beschreibung der zugehörigen Zeichnungen, in denen eine bevorzugte Ausführungsform eines erfindungsgemäßen Kugelgelenkes dargestellt worden ist. In den Zeichnungen zeigen:

Fig. 1 ein Kugelgelenk im Längsschnitt, wobei die Schnittebene beidseitig der Zapfenachse um 90° versetzt verläuft;

Fig. 2 dasselbe Kugelgelenk als perspektivisches Sprengbild.

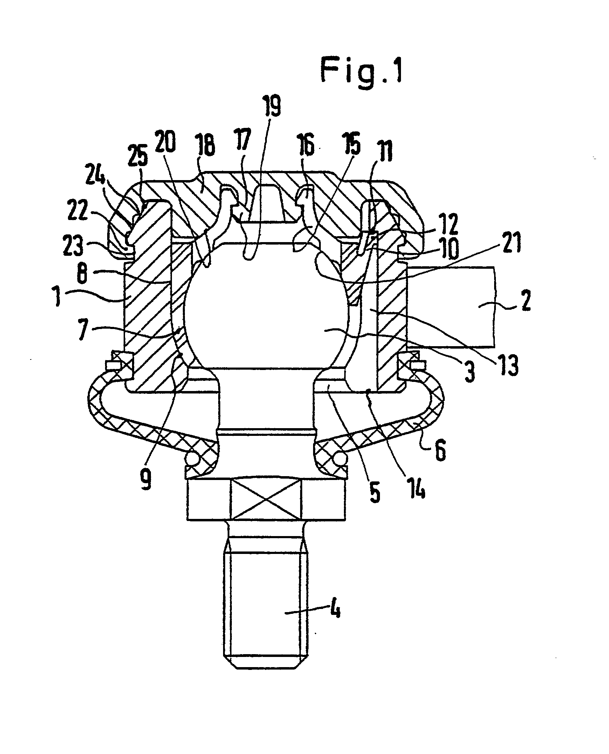

Die Fig. 1 zeigt ein Kugelgelenk mit einem Gelenkgehäuse 1 aus Kunststoff und einer einteilig daran angeformten Verbindungsstange 2. In das Gelenkgehäuse ist dreh- bzw. schwenkbar ein Kugelkopf 3 eingesetzt, dessen Kugelzapfen 4 aus einer Öffnung 5 des Gelenkgehäuses 1 herausragt. Der Spalt zwischen Gelenkgehäuse 1 und Kugelzapfen 4 ist von einem gummielastischen Dichtungsbalg 6 verschlossen, dessen Balgwülste mittels geeigneter Spannmittel am Gelenkgehäuse 1 bzw. Kugelzapfen 4 festgelegt sind.

Der Kugelkopf 3 ist in einer Lagerschale 7 aus Kunststoff gehaltert, die außerhalb des Gelenkgehäuses 1 einen etwa zylindrischen Mantel 8 aufweist, der bei montiertem Kugelgelenk von der sich in Richtung auf die Öffnung 5 hin verjüngenden Innenwand 9 des Gelenkgehäuses 1 zur Zapfenachse hin gebogen wird. Hierdurch wird zugleich die Lagerschale 7 elastisch gegen den Kugelkopf 3 gedrückt und werden Kugelkopf 3 und Lagerschale 7 vor einem axialen Ausziehen aus dem Gelenkgehäuse 1 gesichert.

Ein axiales Ausdrücken der Lagerschale 7 wird durch Vorsprünge 10 verhindert, die an der anderen Stirnseite der Lagerschale 7 angeformt sind und Hinterschnitte 11 des Gelenkgehäuses 1 hintergreifen. Die Vorsprünge 10 haben die Form von Laschen und sind an ihren freien Enden mit Randwülsten 12 versehen.

Die Hinterschnitte 11 sind in Umfangsrichtung der Innenwand 9 des Gelenkgehäuses 1 sich erstreckende Begrenzungswände der in Zapfenachsrichtung an der Innenwand 9 verlaufenden Nuten 13, die sich an der kugelzapfenseitigen Stirnseite 14 des Gelenkgehäuses 1 öffnen. Beim Entformen des Gelenkgehäuses nach dem Spritzgießen wird ein Kernstempelteil an der Stirnseite 14 aus den Nuten 13 herausgezogen und ein weiterer, die übrige Innenwand 9 des Gelenkgehäuses 1 formender Kernstempelteil an der deckelseitigen Öffnung des Gelenkgehäuses 1 herausgezogen. Auf diese Weise können sowohl die Nuten 13 mit den Hinterschnitten 11, als auch die sich zur Öffnung 5 hin verjüngende Innenwand 9 des Gelenkgehäuses 1 erzeugt werden.

Es ist noch darauf hinzuweisen, daß die als Laschen ausgebildeten Vorsprünge 10 spitzwinklig auf die die Hinterschnitte 11 bildenden in Umfangrichtung sich erstreckenden Begrenzungswände der Nuten 13 auftreffen, wodurch sowohl ein günstiges Biegeverhalten der Vorsprünge 10, als eine günstige Krafteinleitung erreicht wird. Bei der dargestellten Ausführungsform sind zwei um 180° versetzte Hinterschnitte 11 und korrespondierende Vorsprünge 10 vorgesehen.

Die Lagerschale weist an ihrer, dem Kugelzapfen 4 abgewandten Stirnseite an den Kugelkopf anliegende Biegefedern 15 auf, die an ihren freien Enden Haken 16 haben, mit denen sie an einem druckknopfartigen Ansatz 17 eines Gehäusedeckels 18 verrastet sind. Der Ansatz 17 weist einen die Haken 16 untergreifenden Rastwulst 19 auf. An ihrer Oberseite liegen die Biegefedern 15 an einem Innenmantel 20 des Gehäusedeckels 18 an. Hierdurch werden sie zur Anlage an den Kugelkopf 3 gezwungen. Um einen definierten Anlagedruck zu erzeugen, sind die Biegefedern 15 im unteren Viertel mit Nocken 21 versehen, mit denen sie auf den Kugelkopf 3 drücken.

Der Gehäusedeckel 18 weist einen Innenflansch 22 auf, der ihn in einer außen umlaufenden Ringnut 23 des Gelenkgehäuses fixiert. Angrenzend hat der Gehäusedeckel 18 an seinem Innenmantel Dichtwülste 24, mit denen er auf einer konisch geneigten Dichtfläche 25 des Gelenkgehäuses 1 aufliegt.

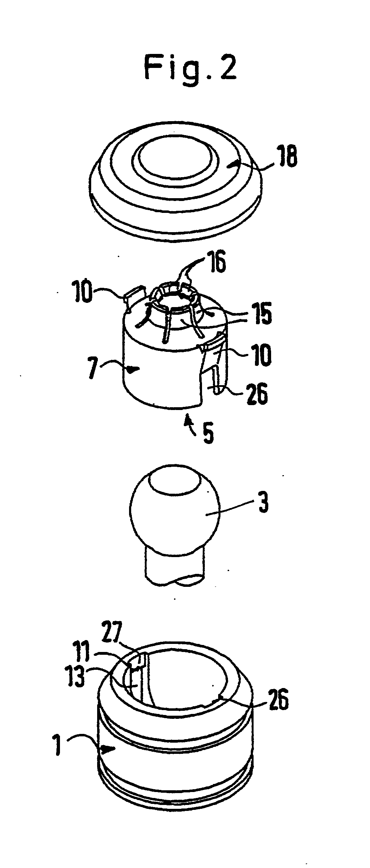

Der Zusammenbau eines erfindungsgemäßen Kugelgelenkes läßt sich am besten anhand der Fig. 2 erläutern. Zunächst wird ein Kugelkopf 3 in die Öffnung 5 einer Lagerschale 7 eingeschoben, wobei nahe der Vorsprünge 10 ausgebildete Ausnehmungen 26 der Lagerschale 7 deren elastisches Aufbiegen und Zuschnappen bei eingesetztem Kugelkopf 3 begünstigen. Darauf wird die vormontierte Einheit von Kugelkopf 3 und Lagerschale 7 in die deckelseitige Öffnung eines Gelenkgehäuses 1 eingeschoben, wobei die beiden laschenförmigen Vorsprünge 10 in Nuten 13 eingeführt werden. Wie aus dieser Zeichnung ersichtlich, können an der Deckelseite des Gelenkgehäuses 1 zusätzliche Einführnuten 27 ausgebildet sein, wobei im Übergangsbereich der Nuten 13 und Einführnuten 27 die Hinterschnitte 11 ausgebildet sind. Diese Hinterschnitte 11 werden von den zurückspringenden Vorsprüngen hintergriffen.

Schließlich wird der Gehäusedeckel 18 montiert, der innen mit den Haken 16 der Biegefedern 15 verrastet und außen in den Randwulst 22 des Gelenkgehäuses 1 einschnappt.

Bezugszeichenliste

1 Gelenkgehäuse
2 Verbindungsstange
3 Kugelkopf
4 Kugelzapfen
5 Öffnung
6 Dichtungsbalg
7 Lagerschale
8 Mantel
9 Innenwand
10 Vorsprung
11 Hinterschnitt
12 Randwulst
13 Nut
14 Stirnseite
15 Biegefeder
16 Haken
17 Ansatz
18 Gehäusedeckel
19 Rastwulst
20 Innenmantel
21 Nocken
22 Innenflansch
23 Ringnut
24 Dichtwulst
25 Dichtfläche
26 Ausnehmung
27 Einführnut

**Patentansprüche**

1. Kugelgelenk für Übertragungsgestänge in Kraftfahrzeugen mit einer zwischen einem Gelenkgehäuse (1) aus Kunststoff und einem Kugelkopf (3) mit Kugelzapfen (4) eingesetzten Lagerschale (7) aus Kunststoff, wobei die Lagerschale (7) durch Verrastung von an ihrem Mantel (8) ausgebildeten Vorsprüngen (10) an in der Innenwand (9) des Gelenkgehäuses (1) ausgebildeten Hinterschnitten (11) gegen Ausstoßen aus dem Gelenkgehäuse (1) mindestens entgegen der Kugelzapfenrichtung gesichert ist, **dadurch gekennzeichnet**, daß die Hinterschnitte (11) Stirnwände von in der Innenwand (9) des Gelenkgehäuses (1) ausgebildeten, sich geradlinig in Kugelzapfenachsrichtung erstreckenden Nuten (13) sind, die offen in der dem Kugelzapfen (4) zugewandten Stirnfläche (14) des Gelenkgehäuses (1) enden und an ihren anderen Enden durch die Stirnwände abgeschlossen sind, und daß die Vorsprünge (10) der Lagerschale (7) in die Nuten (13) eingreifen, wobei sie außer an den Stirnwänden auch an den Seitenwänden der jeweiligen Nut (13) anliegen.

2. Kugelgelenk nach Anspruch 1, dadurch gekennzeichnet, daß die Vorsprünge (10) an die Lagerschale (7) angeformte, sich spitzwinklig zu den Stirnwänden der Nuten (13) erstreckende, biegeelastische Laschen sind.

3. Kugelgelenk nach Anspruch 2, dadurch gekennzeichnet, daß die Laschen an den Stirnwänden, an den Seitenwänden und an Grundflächen der Nuten (13) anliegende Randwülste (12) haben.

4. Kugelgelenk nach einem der Ansprüche 1 bis 3, dadurch gekennzeichnet, daß das Gleenkgehäuse (1) aus GFK hergestellt ist.

5. Kugelgelenk nach einem der Ansprüche 1 bis 4, dadurch gekennzeichnet, daß die Lagerschale (7) aus einem hartelastischen Kunststoff, beispielsweise Polyoxymethylen (POW) hergestellt ist.

**Claims**

1. Ball-and-socket joint for transmission linkages in motor vehicles, comprising a plastic bearing bush (7) inserted between a plastic joint housing (1) and a ball head (3) having a ball pin (4), the bearing bush (7) being secured against ejection from the joint housing (1), at least in the opposite direction to the direction of the ball pin, by the locking of projections (10), formed on its circumference (8), on undercuts (11) formed in the inner wall (9) of the joint housing (1), characterized in that the undercuts (11) are end walls of grooves (13) which are formed in the inner wall (9) of the joint housing (1), extend rectilinearly in the axial direction of the ball pin, terminate in an open manner in the end face (14) of the joint housing (1) facing the ball pin (4) and are closed off at their other ends by the end walls, and that the projections (10) of the bearing bush (7) engage into the grooves (13), in the course of which, apart from bearing against the end walls, they also bear against the side walls of the respective groove (13).

2. Ball-and-socket joint according to Claim 1, characterized in that the projections (10) are flexurally elastic tongues integrally formed on the bearing bush (7) and extending at an acute angle to the end walls of the grooves (13).

3. Ball-and-socket joint according to Claim 2, characterized in that the tongues have edge beads (12) bearing against the end walls, the side walls and root surfaces of the grooves (13).

4. Ball-and-socket joint according to any of Claims 1 to 3, characterized in that the joint housing (1) is made of GRP.

5. Ball-and-socket joint according to any of Claims 1 to 4, characterized in that the bearing bush (7) is made of a hard elastic plastic, for example polyoxymethylene (POM).

**Revendications**

1. Articulation à rotule pour barre de transmission de véhicules automobiles comportant une coquille de palier (7) en matière plastique, placée entre un boîtier d'articulation (1) en matière plastique et une tête de rotule (3) avec axe de rotule (4), la coquille de palier (7) étant protégée de manière à ne pas ressortir du boîtier d'articulation (1), au moins dans le sens opposé à l'axe de rotule, par encliquetage de saillies (10) formées sur son enveloppe (8) dans des détalonnages (11) formés sur la paroi intérieure (9) du boîtier d'articulation (1), caractérisée en ce que les détalonnages (11) sont des parois frontales de rainures (13) formées dans la paroi intérieure (9) du boîtier d'articulation (1), et s'étendant en ligne droite dans la direction de l'axe de rotule, lesquelles rainures aboutissent ouvertes dans la face frontale (14) du boîtier d'articulation (1), tournée vers l'axe de rotule (4), et sont fermées à leur autre extrémité par les parois frontales, et en ce que les saillies (10) de la coquille de palier (7) s'engagent dans les rainures (13) et s'appliquent non seulement contre les parois frontales, mais aussi contre les parois latérales de la rainure (13) concernée.

2. Articulation à rotule selon la revendication 1, caractérisée en ce que les saillies (10) sont des pattes élastiques à la flexion, formées sur la coquille de palier (7) et s'étendant sous un angle aigu par rapport aux parois frontales des rainures (13).

3. Articulation à rotule selon la revendication 2, caractérisée en ce que les pattes ont des bourrelets de bordure (12) qui s'appliquent contre les parois frontales, contre les parois latérales et contre les surfaces de fond des rainures (13).

4. Articulation à rotule selon l'une des revendications 1 à 3, caractérisée en ce que le boîtier d'articulation (1) est réalisé en matière plastique renforcée aux fibres de verre.

5. Articulation à rotule selon l'une des revendications 1 à 4, caractérisée en ce que la coquille de palier (7) est réalisée dans une matière plastique rigide, par exemple en polyoxyméthylène (POM).

# Fig.1

# Fig. 2